# EUROPÄISCHE PATENTANMELDUNG

(11) **EP 3 540 531 A1**
(43) Veröffentlichungstag der Anmeldung: **18.09.2019**
(21) Anmeldenummer: 18161991.7
(22) Anmeldetag: 15.03.2018
(51) Int. Cl.: G05B 17/02

(54) **VERFAHREN ZUM RECHNERGESTÜTZTEN STEUERN EINES TECHNISCHEN SYSTEMS**

(71) Anmelder: Siemens Aktiengesellschaft, 80333 München (DE)
(72) Erfinder: Allmaras, Moritz, 81673 München (DE); Pirsing, Andreas, 16766 Sommerfeld (DE); Schenk, Tim, 84034 Landshut (DE); Sohr, Annelie, 81929 München (DE)

(57) **Zusammenfassung**

Die Erfindung betrifft ein Verfahren und eine Steuervorrichtung (100) zum rechnergestützten Steuern eines technischen Systems. Es wird ein Simulationsmodell zum Simulieren des technischen Systems und ein Prognosemodell zum Vorhersagen eines zukünftigen Verlaufs des technischen Systems bereitgestellt. Mittels einer Auswertung des Simulationsmodells über einen Simulationszeitraum (Δt1) wird ein Initialzustand (1) für das Prognosemodell ermittelt, wobei das Simulationsmodell mittels Messdaten aus dem Simulationszeitraum (Δt1) an das technische System angepasst wird. Mittels einer Auswertung des Prognosemodells über einen Prognosezeitraum (Δt3), ausgehend vom Initialzustand (1) und anhand von Fortsetzungsbedingungen des Prognosemodells, wird ein zukünftiger Zustand (2) des technischen Systems ermittelt und mit den Fortsetzungsbedingungen zum Steuern des technischen Systems ausgegeben.

## Beschreibung

Die Erfindung betrifft ein Verfahren und eine Vorrichtung zum rechnergestützten Steuern eines technischen Systems, insbesondere eines Infrastrukturnetzes.

Die Steuerung und der Betrieb von technischen Systemen, insbesondere komplexen Systemen mit einer Vielzahl an Komponenten, wie z.B. Infrastrukturnetzen, kann mittels eines Assistenzsystems erfolgen, welches, basierend auf aktuellen Messdaten des Systems, Vorschläge für den Betrieb bereitstellt. Es kann mittels einer modellbasierten Auswertung und ausgehend von einer aktuellen Situation eine Vorhersage einer zukünftigen Entwicklung des Systems gegeben werden. Basierend auf dem Modell des Systems können mittels eines Optimierungsprozesses alternative Betriebsweisen getestet und daraus Steuermodi ermittelt werden. Basis der modellbasierten Auswertung ist ein Ausgangszustand für das Prognosemodell, der möglichst realitätsnah und konsistent mit den vorgegebenen Modellgleichungen sein soll. Es kann ein Zustand eines technischen Systems z.B. mit Sensoren erfasst werden. In der Regel liegen allerdings lediglich wenige Beobachtungen eines Systems vor, d.h. ein realer Zustand des Systems ist oft schwer erfassbar und wird anhand von Annahmen über das System geschätzt.

Ein Modell oder eine Simulation des Systems kann durch eine Vielzahl von Freiheitsgraden gekennzeichnet und somit häufig unterbestimmt sein. In der Regel können die unbestimmten Freiheitsgrade durch Annahmen, Regeln, Inter- oder Extrapolationen über das System eingegrenzt und somit die Komplexität des Modells reduziert werden. Es kann ein Ausgangszustand für eine Prognose mittels Annahmen ermittelt werden, wobei häufig die Konsistenz mit den Modellgleichungen nicht gewährleistet oder der angenommene Ausgangszustand weit vom realen Zustand des Systems entfernt sein kann.

Es ist somit eine Aufgabe der vorliegenden Erfindung, einen realitätsnahen und konsistenten Anfangszustand für ein Modell eines technischen Systems zu ermitteln, um eine Prognose zu ermöglichen oder zu verbessern.

Gelöst wird diese Aufgabe durch ein Verfahren mit den Merkmalen des Patentanspruchs 1 und durch eine Steuervorrichtung mit den Merkmalen des Patentanspruchs 8, durch eine Datenstruktur mit den Merkmalen des Patentanspruchs 13, durch ein Computerprogrammprodukt mit den Merkmalen des Patentanspruchs 14 sowie durch ein computerlesbares Speichermedium mit den Merkmalen des Patentanspruchs 15. Vorteilhafte Ausführungsformen und Weiterbildungen der Erfindung sind in den abhängigen Ansprüchen angegeben.

Ein erster Aspekt der Erfindung betrifft ein Verfahren zum rechnergestützten Steuern eines technischen Systems mit den Verfahrensschritten:
- Bereitstellen eines Simulationsmodells zum Simulieren des technischen Systems und eines Prognosemodells zum Vorhersagen eines zukünftigen Verlaufs des technischen Systems,
- Ermitteln eines Initialzustands für das Prognosemodell mittels einer Auswertung des Simulationsmodells über einen Simulationszeitraum, wobei das Simulationsmodell mittels Messdaten aus dem Simulationszeitraum an das technische System angepasst wird,
- Ermitteln eines zukünftigen Verlaufs des technischen Systems mittels einer Auswertung des Prognosemodells über einen Prognosezeitraum, ausgehend vom Initialzustand und anhand von Fortsetzungsbedingungen für das Prognosemodell,
   und
- Ausgeben des zukünftigen Verlaufs des technischen Systems und der Fortsetzungsbedingungen zum Steuern des technischen Systems.

Ein Vorteil des erfindungsgemäßen Verfahrens ist insbesondere das Bereitstellen eines realitätsnahen und konsistenten Initialzustandes für die Prognose eines zukünftigen Verlaufs eines technischen Systems über einen Prognosezeitraum mittels einer Simulation des technischen Systems. Die Auswertung des Simulationsmodells und des Prognosemodells kann auf einfache Weise über den Initialzustand miteinander verknüpft werden. Unter Auswertung des Simulationsmodells und/oder des Prognosemodells kann insbesondere eine Durchführung einer Simulation des technischen Systems über einen vorgegebenen Zeitraum verstanden werden. Es ist eine Vorhersage eines zukünftigen Zustands und/oder Verlauf des technischen Systems mit hoher Genauigkeit möglich, da mittels des an das technische System angepassten Simulationsmodells ein realitätsnaher Initialzustand für das Prognosemodell ermittelt wird.

Ein Zustand des Systems und/oder des Simulationsmodells und/oder des Prognosemodells kann insbesondere ein Datenzustand sein und beispielsweise in einer Datenstruktur gespeichert sein.

Das technische System kann insbesondere ein Infrastrukturnetz, wie z.B. ein Wassernetz, ein Abwassernetz, ein Energienetz, ein Verkehrsnetz, sowie eine industrielle Automatisierungsanlage sein. Im Folgenden wird "technisches System" und "System" gleichbedeutend verwendet.

Es kann mittels der Simulation, z.B. mit einem komplexen Simulationsmodell des technischen Systems, ausgehend von einem Zeitpunkt in der Vergangenheit, das System simuliert werden. Ein Zustand zum Zeitpunkt in der Vergangenheit kann als ein Ausgangszustand für das Simulationsmodell mit ersten groben oder vereinfachten Annahmen über das System abgeschätzt werden.

Insbesondere kann das Simulationsmodell während des Simulationszeitraums mit Messdaten des technischen Systems angepasst werden. "Anpassung" kann beispielsweise bedeuten, dass die Einstellwerte von Parametern, wie z.B. statische oder zeitlich variable Parameter und Randbedingungen, des Simulationsmodells derart verändert werden, dass das Simulationsmodell die tatsächliche Physik des technischen Systems zum Ende des Simulationszeitraums im Rahmen der durch die Auswahl des Simulationsmodells gegebenen Abstraktion reproduziert. Dazu kann während der Simulation, ausgehend von einem Anfangszustand in der Vergangenheit, der z.B. den realen Zustand nur vereinfacht beschreibt, schrittweise mit der Zeit eine Differenz zwischen einem Zustand des Simulationsmodells und realen Messwerten verringert werden, indem Einstellwerte von Parametern des Simulationsmodells verändert werden.
Eine Anpassungsgüte kann beispielsweise mittels statistischer Abstandsmaße bestimmt werden. In anderen Worten, anhand von Messdaten, die die Physik bzw. den realen Zustand des technischen Systems wiedergeben, werden in vorgegebenen Zeitschritten Parameter des Simulationsmodells eingestellt, so dass ein Zustand des Simulationsmodells den realen Zustand annähert.

Es können beispielsweise Messungen mit Sensoren durchgeführt werden, die Messdaten des technischen Systems erfassen. Insbesondere können die Messdaten simultan zum Simulationszeitraum erfasst werden, d.h. zeitgleich zu der Zeitspanne der Simulation. Die Messwerte können beispielsweise kontinuierlich mit dem Simulationsmodell abgeglichen werden oder zu vorgegebenen Zeitpunkten während des Simulationszeitraums. Mittels der Simulation kann ein Initialzustand ermittelt werden, der einen realen Zustand des technischen Systems zu einem Zeitpunkt am Ende des Simulationszeitraums annähert. In anderen Worten, durch die Anpassung des Simulationsmodells an das technische System anhand der simultanen Messdaten, kann ein realitätsnaher Initialzustand ermittelt werden.

Ausgehend vom ermittelten Initialzustand kann mittels einer Auswertung des Prognosemodells ein zukünftiger Verlauf des technischen Systems ermittelt werden. Insbesondere kann das Prognosemodell identisch mit dem Simulationsmodell sein. Das Prognosemodell kann des Weiteren weniger komplex oder abstrakter als das Simulationsmodell sein, wobei eine Auswertung des Prognosemodells schneller durchgeführt werden kann. Insbesondere wird das Prognosemodell ausgehend vom Initialzustand und anhand von vorgegebenen Fortsetzungsbedingungen, z.B. Randbedingungen oder Betriebsweisen des technischen Systems, ausgewertet und daraus eine Vorhersage des zeitlichen Verlaufs des technischen Systems ermittelt. Fortsetzungsbedingungen können beispielsweise konstante Fortführung, Betrieb nach gegebenen Regeln oder vorab festgelegte Fahrpläne sein.

Der zukünftige Verlauf des technischen Systems und insbesondere die Fortsetzungsbedingungen für das Prognosemodell können zum Steuern des technischen Systems ausgegeben werden. Es kann beispielsweise ein Vorschlag für einen Steuermodus oder eine Betriebsweise aus dem zukünftigen Verlauf und insbesondere den vorgegebenen Fortsetzungsbedingungen für das Prognosemodell abgeleitet werden.

Außerdem kann anhand des ermittelten zukünftigen Verlaufs abgeleitet werden, ob ein geeigneter Steuermodus oder Steuerungsplan, der beispielsweise durch die Fortsetzungsbedingungen bestimmt ist, für das System eingestellt ist. Die Ermittlung des zukünftigen Verlaufs anhand der Auswertung des Prognosemodells des technischen Systems kann dazu dienen die Entwicklung des Systems unter den aktuellen Bedingungen zu untersuchen.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Gemäß einer vorteilhaften Ausführungsform des Verfahrens kann das Simulationsmodell
- bis zu einem aktuellen Zeitpunkt mittels Messdaten an das technische System angepasst und ausgewertet werden und
- nach dem aktuellen Zeitpunkt über einen Übergangszeitraum bis zum Ende des Simulationszeitraums mittels Fortsetzungsbedingungen für das Simulationsmodell ausgewertet werden.

Die Auswertung des Simulationsmodells, d.h. die Durchführung der Simulation, kann von einem Zeitpunkt in der Vergangenheit bis zu einem aktuellen Zeitpunkt durchgeführt werden, wobei während dieses Zeitraums das Simulationsmodell mit zeitgleichen Messdaten des technischen Systems angepasst werden kann. Ab dem aktuellen Zeitpunkt kann die Simulation mittels Fortsetzungsbedingungen für das Simulationsmodell fortgesetzt werden, wobei keine weitere Anpassung des Simulationsmodells an Messdaten durchgeführt wird. Dies hat beispielsweise den Vorteil, dass ein Initialzustand für die Auswertung des Prognosemodells zu einem Zeitpunkt in der Zukunft, d.h. nach dem aktuellen Zeitpunkt am Ende des Übergangszeitraums, ermittelt werden kann. Insbesondere kann die Auswertung des Prognosemodells zu einem Zeitpunkt in der nahen Zukunft gestartet werden, wobei der Übergangszeitraum die Bearbeitungsdauer der Auswertung des Simulations- und Prognosemodells nach dem aktuellen Zeitpunkt überbrücken kann.

Die Fortsetzungsbedingungen für die Fortführung der Auswertung des Simulationsmodells über den Übergangszeitraum können beispielsweise Randbedingungen oder Betriebsweisen, wie z.B. konstante oder kontinuierliche Bedingungen, für das Simulationsmodell sein. Die Fortsetzungsbedingungen können beispielsweise auf Regeln oder Betriebsplänen des technischen Systems basieren. Die Fortsetzungsbedingungen für das Simulationsmodell können insbesondere ab dem aktuellen Zeitpunkt gelten, wenn keine simultanen Messdaten des Systems mehr vorliegen.

Gemäß einer vorteilhaften Ausführungsform des Verfahrens kann mindestens eine Fortsetzungsbedingung des Prognosemodells verändert werden und mittels der Auswertung des Prognosemodells mit veränderten Fortsetzungsbedingungen mindestens ein weiterer zukünftiger Verlauf des technischen Systems ermittelt werden.

Es kann insbesondere ein alternativer oder optimaler zukünftiger Verlauf des technischen Systems mittels z.B. mehrmaliger Auswertung des Prognosemodells mit veränderten Fortsetzungsbedingungen ermittelt werden. Fortsetzungsbedingungen können beispielsweise von variablen Fortsetzungsbedingungen in konstante Fortsetzungsbedingungen geändert werden. Es kann daraus ein entsprechender alternativer oder optimaler Steuermodus ermittelt werden, wenn beispielsweise die Veränderung der Fortsetzungsbedingungen zu einem bevorzugten zukünftigen Verlauf des Systems führt. Auf Basis des Prognosemodells kann ein optimaler Betrieb oder alternative Betriebsweisen eines technischen Systems bestimmt werden.
Durch Verändern der Rand- bzw. Fortsetzungsbedingungen des Prognosemodells können alternative Verläufe der zeitlichen Entwicklung des Systems ermittelt werden. Beispielsweise können verschiedene Betriebsweisen als Fortsetzungsbedingungen vorgegeben sein und mittels der Auswertung des Prognosemodells der zukünftige Verlauf des Systems untersucht werden. Daraus können alternative Steuermodi ermittelt oder verglichen werden.
Es können insbesondere mittels eines Optimierungsverfahrens die Fortsetzungsbedingungen automatisch, durch einen Optimierungsalgorithmus, verändert werden und ein optimaler Verlauf des Systems ermittelt werden. Damit kann beispielsweise eine Betriebsoptimierung erreicht werden.

Gemäß einer vorteilhaften Ausführungsform des Verfahrens kann die Auswertung des Simulationsmodells während des Prognosezeitraums fortgesetzt und ein Verlauf des Simulationsmodells ermittelt werden.

Es kann die Auswertung des Simulationsmodells über den Prognosezeitraum mittels Fortsetzungsbedingungen für das Simulationsmodell fortgeführt werden. Es kann ein Verlauf des Simulationsmodells bis zu einem zukünftigen Zeitpunkt ermittelt werden. Vorzugsweise kann der zukünftige Verlauf des Simulationsmodells während des Prognosezeitraums mit einem durch das Prognosemodell ermittelten zukünftigen Verlauf des technischen Systems verglichen werden. Dazu werden vorzugsweise die Fortsetzungsbedingungen des Prognosemodells für die Simulation genutzt. Die Fortsetzungsbedingungen für das Simulationsmodell können den Fortsetzungsbedingungen für das Prognosemodell ganz oder teilweise entsprechen. Es kann insbesondere eine Evaluation oder Validierung des Prognosemodells erfolgen. Es kann der Verlauf von zusätzlichen Größen, wie z.B. Leistungskennzahlen, des technischen Systems ermittelt werden, welche beispielsweise durch ein abstrakteres Prognosemodell nicht abgebildet werden kann.

Gemäß einer vorteilhaften Ausführungsform des Verfahrens kann eine erneute Auswertung des Simulationsmodells abhängig von einem durch eine vorangegangene Auswertung des Simulationsmodells ermittelten Initialzustand durchgeführt werden.

Es kann eine erneute Auswertung des Simulationsmodells ausgehend von einem vorher durch eine Simulation ermittelten Initialzustand durchgeführt werden. Beispielsweise kann das Simulationsmodell abhängig von Fortsetzungsbedingungen ausgewertet werden, die durch eine vorangegangene Auswertung des Prognosemodells, z.B. als optimale Fortsetzungsbedingungen, ermittelt wurden. Es kann das erfindungsgemäße Verfahren beispielsweise mehrmals hintereinander durchgeführt werden, wobei der ermittelte Initialzustand als Ausgangszustand des Simulationsmodells genutzt werden kann. Mittels eines Optimierungsverfahrens, z.B. Testen verschiedener Fortsetzungsbedingungen für das Prognosemodell und Vergleich der Prognoseergebnisse mit Kenngrößen des Systems, kann ein optimaler Steuer- oder Betriebsmodus ermittelt und als Fortsetzungsbedingungen für eine erneute Simulation des technischen Systems genutzt werden.

Gemäß einer vorteilhaften Ausführungsform des Verfahrens kann der Simulationszeitraum und der Prognosezeitraum jeweils um eine Zeitspanne verschoben und ein zukünftiger Verlauf des technischen Systems ermittelt werden.

Die Prognose von mehr als einem zukünftigen Verlauf des technischen Systems kann sukzessive, nach vorgegebenen Zeitschritten, durchgeführt werden. Es kann die Verschiebung um eine Zeitspanne, die beispielsweise kürzer ist als der Prognosezeitraum, insbesondere mehr als einmal und regelmäßig erfolgen. Damit kann vorzugsweise die Annäherung an den realen Zustand des technischen Systems sowie die Vorhersage eines zukünftigen Verlaufs verbessert werden. Eine Unsicherheit der Prognose kann durch eine zyklische Aktualisierung minimiert werden. Insbesondere kann die Auswertung des Simulationsmodells abhängig von einer vorhergehenden Auswertung des Simulationsmodells, d.h. ausgehend von einem vorher ermittelten Initialzustand, durchgeführt werden.

Gemäß einer vorteilhaften Ausführungsform des Verfahrens können zusätzliche Daten über das technische System für die Auswertung des Prognosemodells genutzt werden.

Es können vorzugsweise weitere Daten, wie z.B. Betriebsdaten oder Umgebungsdaten, in die Auswertung des Prognosemodells mit einbezogen werden. Beispielsweise können vorverarbeitete oder ausgewertete Daten, statistische Größen, Vorgaben oder Einschränkungen dafür genutzt werden. Damit kann die Prognose eines zukünftigen Verlaufs des technischen Systems verbessert werden.

Einen weiteren Aspekt der Erfindung betrifft eine Steuervorrichtung zum rechnergestützten Steuern eines technischen Systems umfassend:
- ein Bereitstellungsmodul zum Bereitstellen eines Simulationsmodells zum Simulieren des technischen Systems und eines Prognosemodells zum Vorhersagen eines zukünftigen Verlaufs des technischen Systems,
- ein Simulationsmodul zum Ermitteln eines Initialzustands für das Prognosemodell mittels einer Auswertung des Simulationsmodells über einen Simulationszeitraum, wobei das Simulationsmodell mittels Messdaten aus dem Simulationszeitraum an das technische System angepasst wird,

- ein Prognosemodul zum Ermitteln eines zukünftigen Verlaufs des technischen Systems mittels einer Auswertung des Prognosemodells über einen Prognosezeitraum, ausgehend vom Initialzustand und anhand von Fortsetzungsbedingungen für das Prognosemodell,
   und
- ein Ausgabemodul zum Ausgeben des zukünftigen Verlaufs des technischen Systems und der Fortsetzungsbedingungen zum Steuern des technischen Systems.

Die Steuervorrichtung kann insbesondere ein Assistenzsystem zum Steuern einer Infrastrukturanlage sein.

Gemäß einer vorteilhaften Ausführungsform der Steuervorrichtung kann das Simulationsmodul derart eingerichtet sein, das Simulationsmodell
- bis zu einem aktuellen Zeitpunkt mittels Messdaten an das technische System anzupassen und auszuwerten
   und
- nach dem aktuellen Zeitpunkt über einen Übergangszeitraum bis zum Ende des Simulationszeitraums mittels Fortsetzungsbedingungen für das Simulationsmodell auszuwerten.

Gemäß einer vorteilhaften Ausführungsform der Steuervorrichtung kann das Simulationsmodul derart eingerichtet sein, die Auswertung des Simulationsmodells während des Prognosezeitraums fortzuführen und einen Verlauf des Simulationsmodells zu ermitteln.

Gemäß einer vorteilhaften Ausführungsform kann die Steuervorrichtung ein Modifikationsmodul, zum Ermitteln mindestens eines weiteren zukünftigen Verlaufs des technischen Systems durch Verändern mindestens einer Fortsetzungsbedingung des Prognosemodells und mittels der Auswertung des Prognosemodells mit veränderten Fortsetzungsbedingungen, umfassen. Gemäß einer vorteilhaften Ausführungsform kann die Steuervorrichtung ein Datenmodul zum Bereitstellen von zusätzlichen Daten über das technische System für die Auswertung des Prognosemodells umfassen.

Ein weiterer Aspekt der Erfindung betrifft eine Datenstruktur, in der ein Initialzustand für das Prognosemodell, der durch das erfindungsgemäße Verfahren ermittelt wird, gespeichert wird und die die Auswertung des Simulationsmodells und des Prognosemodells miteinander koppelt.

Vorzugsweise wird eine einheitliche Datenstruktur vom Simulationsmodell und vom Prognosemodell genutzt, die den Initialzustand für das Prognosemodell abbildet. Insbesondere kann die Ausgabe der Auswertung des Simulationsmodells, d.h. der Initialzustand, die Eingabe für das Prognosemodell sein. Es kann mittels dieser Datenstruktur eine Kopplung des Simulationsmodells an das Prognosemodell, insbesondere auch in wechselnder Reihenfolge, erreicht werden.

Des Weiteren umfasst die Erfindung ein Computerprogrammprodukt, das direkt in einen programmierbaren Computer ladbar ist, umfassend Programmcodeteile, die dazu geeignet sind, die Schritte des Verfahrens durchzuführen und ein computerlesbares Speichermedium.

Ausführungsbeispiele des erfindungsgemäßen Verfahrens und der Steuervorrichtung sind in den Zeichnungen beispielhaft dargestellt und werden anhand der nachfolgenden Beschreibung näher erläutert. Es zeigen in schematischer Darstellung:
- Fig. 1: ein erstes Beispiel des Verfahrens zum rechnergestützten Steuern eines technischen Systems als Ablaufdiagramm;
- Fig. 2: ein erstes Beispiel eines zeitlichen Ablaufs des Verfahrens zum rechnergestützten Steuern eines technischen Systems entlang einer Zeitachse;
- Fig. 3: ein zweites Beispiel des Verfahrens zum rechnergestützten Steuern eines technischen Systems als Ablaufdiagramm;
- Fig. 4: ein zweites Beispiel eines zeitlichen Ablaufs des Verfahrens zum rechnergestützten Steuern eines technischen Systems entlang einer Zeitachse;
- Fig. 5: ein Ausführungsbeispiel der Steuervorrichtung zum rechnergestützten Steuern eines technischen Systems.

Einander entsprechende Gegenstände sind in allen Figuren mit den gleichen Bezugszeichen versehen.

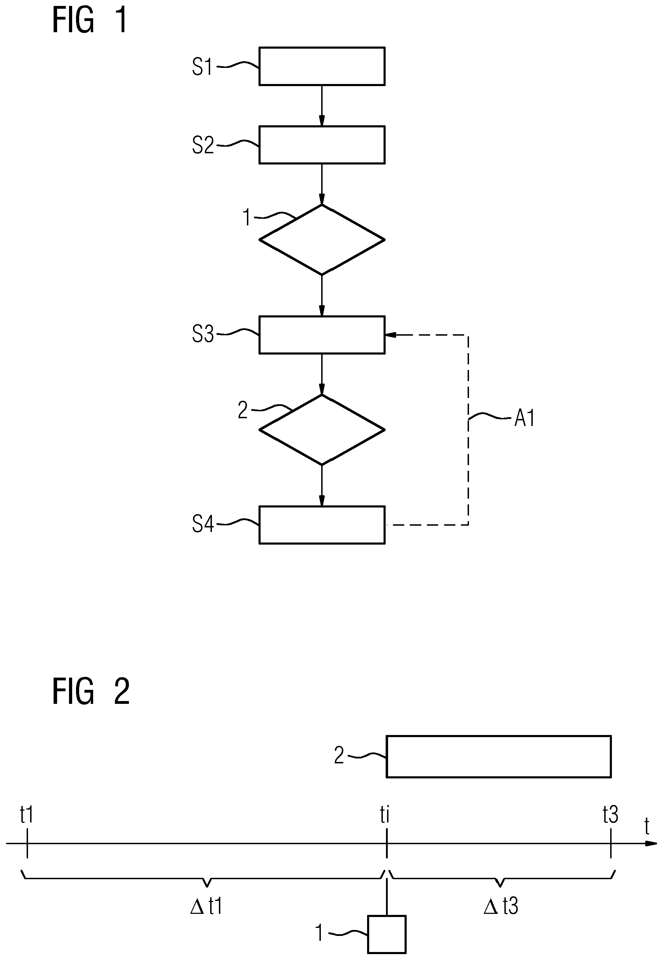

Figur 1 zeigt schematisch als Ablaufdiagramm Schritte des erfindungsgemäßen Verfahrens zum rechnergestützten Steuern eines technischen Systems. Im ersten Schritt des Verfahrens werden ein Simulationsmodell zum Simulieren des technischen Systems, z.B. mittels einer dynamischen Simulation, und ein Prognosemodell zum Vorhersagen eines zukünftigen Verlaufs des technischen Systems bereitgestellt. Es kann beispielsweise Ziel des Verfahrens sein, aus der Simulation und anschließenden Prognose einen Steuermodus für das technische System zu ermitteln. Das Simulationsmodell und das Prognosemodell bilden die physikalischen Eigenschaften des Systems ab.
Das Simulationsmodell und das Prognosemodell können identisch sein oder das Prognosemodell kann weniger komplex bzw. abstrakter als das Simulationsmodell sein.

Es kann beispielsweise die zeitliche Entwicklung des technischen Systems mittels des Simulationsmodells simuliert werden. Dazu wird ein Ausgangszustand für das Simulationsmodell bereitgestellt. Dieser kann eine vereinfachte Annahme eines Zustands des technischen Systems bei einem Zeitpunkt in der Vergangenheit sein. Ausgehend von diesem Ausgangszustand in der Vergangenheit wird im zweiten Schritt S2 des Verfahrens das Simulationsmodell über einen Simulationszeitraum ausgewertet, d.h. es wird eine Simulation durchgeführt. Während des Simulationszeitraums wird das Simulationsmodell mittels Messdaten des realen technischen Systems aus dem Simulationszeitraum an dieses angepasst. In anderen Worten, anhand von zeitgleichen Messdaten wird das Simulationsmodell derart konfiguriert, dass es das reale technische System abbildet. Die Einstellwerte von Parametern des Simulationsmodells werden sukzessive, z.B. in regelmäßigen Zeitabständen während des Simulationszeitraums, verändert, um das Simulationsmodell an das reale technische Modell anzupassen und dabei eine Anpassungsgüte zu optimieren.

Insbesondere können die Messdaten kontinuierlich oder schrittweise bereitgestellt werden, so dass die Anpassung des Simulationsmodells kontinuierlich oder schrittweise erfolgen kann. Mittels der Simulation wird durch den Schritt S2, am Ende des Simulationszeitraums, ein Initialzustand 1 für das Prognosemodell ermittelt. Der Initialzustand 1 ist ein Zustand des Simulationsmodells zu einem vorgegebenen Zeitpunkt, beispielsweise dem aktuellen Zeitpunkt des technischen Systems, ausgehend vom dem eine Vorhersage eines Verlaufs des Systems durchgeführt werden kann. Durch die Anpassung des Simulationsmodells an das technische System mittels der zeitgleichen Messdaten während des Simulationszeitraums, ist der ermittelte Initialzustand 1 eine Näherung des tatsächlichen Zustands des technischen Systems zu dem vorgegeben Zeitpunkt. Der tatsächliche Zustand des technischen Systems kann in der Regel nur schwer direkt messbar sein.

Der Initialzustand 1 ist insbesondere in einer Datenstruktur gespeichert oder darin bereitgestellt, die das Simulationsmodell mit dem Prognosemodell koppelt. Die Datenstruktur kann beispielsweise so ausgebildet sein, dass das Simulationsmodell und das Prognosemodell darauf zugreifen können.

Ausgehend vom ermittelten Initialzustand 1 und vorgegebener Fortsetzungsbedingungen wird im Schritt S3 des Verfahrens das Prognosemodell ausgewertet. Das Prognosemodell kann beispielsweise eine abstrakte Form des Simulationsmodells sein, um eine schnellere Auswertung und Prognose zu ermöglichen. Die Auswertung des Prognosemodells erfolgt über einen Prognosezeitraum bis zu einem Zeitpunkt in der Zukunft, womit ein zukünftiger Verlauf 2 des technischen Systems ermittelt wird.

Im Schritt S4 des Verfahrens wird der zukünftige Verlauf 2 und die Fortsetzungsbedingungen zum Steuern des technischen Systems ausgegeben. Es kann beispielsweise anhand der für die Auswertung des Prognosemodells vorgegebenen Fortsetzungsbedingungen ein Steuerbefehl für das technische System abgeleitet werden. Die Vorhersage eines zukünftigen Verlaufs erlaubt des Weiteren beispielsweise zu überprüfen, ob der aktuelle Steuermodus geeignet ist oder geändert werden muss.

Es ist des Weiteren möglich, dass mittels einer Alternativenberechnung oder eines Optimierungsverfahrens, siehe Pfeil A1, d.h. Verändern mindestens einer Fortsetzungsbedingung des Prognosemodells, und erneuter Auswertung des Prognosemodells mittels veränderter Fortsetzungsbedingungen ein weiterer zukünftiger Verlauf 2 des technischen Systems ermittelt wird. Insbesondere kann mittels eines Optimierungsverfahrens, wobei die Fortsetzungsbedingungen optimiert werden, ausgehend vom ermittelten Initialzustand 1 ein optimaler zukünftiger Verlauf des technischen Systems und daraus optimale Steuermaßnahmen ermittelt werden.

Durch einen Vergleich mit einem vorgegeben, z.B. erwarteten Verlauf, kann beispielsweise eine alternative Maßnahme für die Steuerung des Systems abgeleitet werden. Es ist beispielsweise bei der Steuerung eines Energienetzes möglich, dass die Vorhersage mittels des Prognosemodells ein Defizit an eingespeister Energie zu einem zukünftigen Zeitpunkt t3 vorhersagt. Es können die Fortsetzungsparameter des Prognosemodells des Energienetzes verändert werden und verschiedene Szenarien des Energienetzes damit ausgewertet werden. Beispielsweise kann auf diese Weise eine alternative Steuermaßnahme ermittelt werden.

Das technische System kann ein Infrastrukturnetz sein, dessen tatsächlicher Zustand zu einem Zeitpunkt aufgrund weniger Sensoren nur begrenzt bestimmbar ist. Mittels des beschriebenen Verfahrens kann ein zukünftiger Verlauf 2 des Systems mit hoher Genauigkeit vorhergesagt werden, da der Initialzustand 1 für die Prognose mittels eines detaillierten und angepassten Simulationsmodells des Infrastrukturnetzes ermittelt wird.

Beispielsweise kann das Infrastrukturnetz ein Wassernetz sein, wobei der zukünftige Verlauf 2 einen Energieverbrauch umfasst. Es kann abhängig von den Fortsetzungsbedingungen des Prognosemodells und dem ermittelten zukünftigen Verlauf 2 eine Betriebsweise oder ein Steuerbefehl untersucht werden. Durch eine erneute Auswertung mit veränderten Fortsetzungsbedingungen kann eine Prognose mit einer alternativen Betriebsweise durchgeführt werden. Mittels eines Optimierungsverfahrens können die Fortsetzungsbedingungen automatisch verändert und der prognostizierte Verlauf bewertet werden. Damit können Fortsetzungsbedingungen für das Prognosemodell ermittelt werden, die beispielsweise einen gewünschten Verlauf erzielen.

In Figur 2 ist eine Zeitachse gezeigt, mit der beispielhaft der zeitliche Verlauf des in Figur 1 beschriebenen Verfahrens dargestellt ist. Ausgehend von einem Zeitpunkt t1 in der Vergangenheit wird ein Simulationsmodell über einen Simulationszeitraum Δt1 ausgewertet. Der Simulationszeitraum Δt1 kann beispielsweise bis zu einem vorgegebenen Zeitpunkt ti dauern. Während des Simulationszeitraums Δt1 wird das Simulationsmodell mittels simultaner Messdaten des technischen Systems konfiguriert. Die Auswertung des Simulationsmodells am Ende des Simulationszeitraums Δt1 an einem vorgegebenen Zeitpunkt ti ergibt einen Initialzustand 1 für das Prognosemodell. Der Initialzustand 1 ist ein Ergebniszustand des Simulationsmodells zum Zeitpunkt ti, z.B. der aktuelle Zeitpunkt des technischen Systems. Ausgehend vom Initialzustand 1 wird über einen Prognosezeitraum Δt3 bis zu einem Zeitpunkt in der Zukunft t3 das Prognosemodell ausgewertet und ein zukünftiger Verlauf des Systems ermittelt. Die Auswertung des Prognosemodells ergibt den zukünftigen Verlauf 2 des technischen Systems bis zum Zeitpunkt t3. Dieser kann, durch die präzise Ermittlung des Initialzustands 1, mit einer hohen Prognosegenauigkeit angegeben werden.

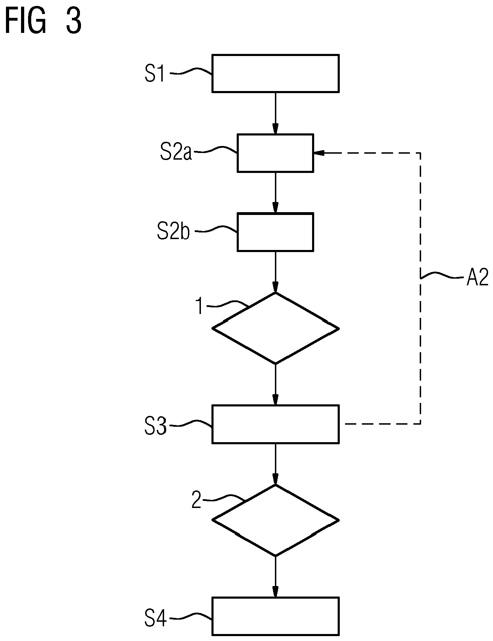

Figur 3 zeigt ein zweites Beispiel des Verfahrens als Ablaufdiagramm. Im Schritt S1 werden ein Simulationsmodell und ein Prognosemodell, die jeweils die physikalischen Eigenschaften des technischen Systems abbilden, bereitgestellt. In Schritt S2a wird das Simulationsmodell ausgewertet, wobei es mittels Messdaten des technischen Systems an dieses schrittweise angepasst wird. Insbesondere wird die Auswertung mittels Anpassung bis zu einem aktuellen Zeitpunkt t2 durchgeführt. Die Auswertung des Simulationsmodells wird anschließend, d.h. nach dem aktuellen Zeitpunkt t2, für einen Übergangszeitraum Δt2 im Schritt S2b anhand von Fortsetzungsbedingungen für das Simulationsmodell fortgesetzt. Der Simulationszeitraums Δt1 kann insbesondere den Übergangszeitraum Δt2 umfassen. Die Fortsetzungsbedingung des Simulationsmodells kann beispielsweise eine konstante Fortsetzung, z.B. mit konstant fortgesetzten Randbedingungen, der Simulation sein. Insbesondere kann die Fortsetzung ausgehend vom Zustand des Simulationsmodells am aktuellen Zeitpunkt erfolgen, bis zu dem das Simulationsmodell mittels simultaner Messdaten angepasst wird. Als Ergebnis der Fortsetzung der Auswertung über den Übergangszeitraum Δt2 wird ein Initialzustand 1 zum Zeitpunkt ti ermittelt.

Es kann beispielsweise in einem erneuten Simulationsverfahren, z.B. zur Verbesserung der Anpassung des Simulationsmodells an die Messdaten, einen zuvor ermittelten Initialzustand 1 als Eingabe für die erneute Auswertung des Simulationsmodells genutzt werden, siehe Pfeil A2. In anderen Worten, ein ermittelter Initialzustand 1 kann in einer späteren Auswertung als Ausgangszustand der Simulation genutzt werden, um eine höhere Prognosegüte zu erzielen und die Rechenzeit für die Anpassung des Simulationsmodells an das technische System zu reduzieren.

Ausgehend vom Initialzustand 1 wird im Schritt S3 das Prognosemodell mittels Fortsetzungsbedingungen für das Prognosemodell ausgewertet und ein zukünftiger Verlauf 2 des technischen Systems vorhergesagt. Der zukünftige Verlauf 2 wird in Schritt S4 zum Steuern des technischen Systems ausgegeben. Abhängig vom ermittelten Verlauf und anhand der Fortsetzungsbedingungen kann ein Steuermodus für das System ermittelt werden.

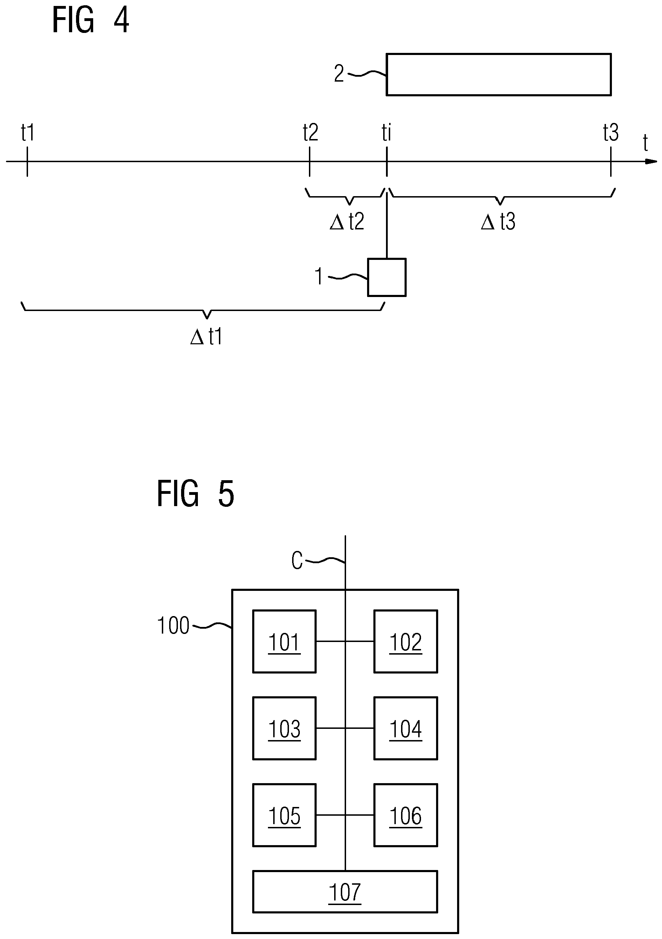

Figur 4 zeigt auf einer Zeitachse den Ablauf des erfindungsgemäßen Verfahrens wie in Figur 3 beschrieben. Ausgehend von einem Zeitpunkt t1 in der Vergangenheit wird das Simulationsmodell über den Simulationszeitraum Δt1 ausgewertet. Insbesondere wird das Simulationsmodell bis zu einem aktuellen Zeitpunkt t2 mittels Messdaten des technischen Systems an dieses angepasst. Während eines anschließenden Übergangszeitraums Δt2 bis zu einem vorgegebenen Zeitpunkt ti in der Zukunft wird die Simulation unter Fortsetzungsbedingungen für die Simulation fortgesetzt. Am Ende des Übergangszeitraums Δt2 wird ein Zustand des Simulationsmodells ermittelt, welcher als Initialzustand 1 für das Prognosemodell dient. Insbesondere wird der Initialzustand 1 realitätsnah und konsistent bestimmt, d.h. er ist nahe an der Realität des technischen Systems und erfüllt sowohl die Gleichungen des Simulations- als auch des Prognosemodells. Das Prognosemodell wird ausgehend vom Initialzustand 1 und über den Prognosezeitraum Δt3 ausgewertet und ermöglicht die Vorhersage eines zukünftigen Verlaufs 2 des technischen Systems unter gegebenen Bedingungen bis zu einem Zeitpunkt t3 in der Zukunft.

Die Auswertung des Simulationsmodells kann während des Prognosezeitraum Δt3 fortgesetzt werden. Beispielsweise kann die Fortsetzung mittels vorgegebener Fortsetzungsbedingungen für das Simulationsmodell oder mittels verbesserter oder optimierter Fortsetzungsbedingungen aus einer vorangegangenen Auswertung des Prognosemodells erfolgen. Beispielsweise können verbesserte oder optimierte Fortsetzungsbedingungen veränderte Randbedingungen umfassen. Es kann aus der Fortsetzung des Simulationsmodells am Ende des Prognosezeitraums Δt3 ein Verlauf des Simulationsmodells bis zum Zeitpunkt t3 ermittelt werden. Dieser kann mit dem vorhergesagten zukünftigen Verlauf 2 des technischen Systems verglichen werden. Es kann damit beispielsweise eine Validierung des Prognosemodells durchgeführt werden, insbesondere wenn das Prognosemodell abstrakter als das Simulationsmodell ausgebildet ist.

Der Simulations- und Prognosezeitraum Δt3 kann des Weiteren auch nach einer Auswertung des Prognosemodells schrittweise um eine Zeitspanne, die beispielsweise kürzer ist als der Prognosezeitraum Δt3, verschoben werden. So kann eine zyklische Auswertung des Prognosemodells erfolgen und regelmäßig ein zukünftiger Verlauf des Systems ermittelt werden, um z.B. die Unsicherheit der Prognose zu minimieren. Für Auswertung des Simulationsmodells kann dabei schrittweise einen ermittelten Initialzustand aus einer vorangegangenen Auswertung als Ausgangszustand genutzt werden.

Es ist des Weiteren möglich, dass die Auswertung des Prognosemodells mittels zusätzlicher Daten über das technische System durchgeführt wird. Beispielsweise können vorverarbeitete Daten, wie z.B. Betriebsdaten, Prognosen für unterschiedliche Eingangsgrößen, statistische Zusammenhänge, etc. zusammen mit dem Initialzustand für die Auswertung des Prognosemodells genutzt werden.

Figur 5 zeigt ein Beispiel einer erfindungsgemäßen Steuervorrichtung 100 umfassend ein Bereitstellungsmodul 101, ein Simulationsmodul 102, ein Prognosemodul 103, ein Ausgabemodul 104, ein Modifikationsmodul 105, ein Datenmodul 106 und einen Prozessor 107, zum Durchführen des erfindungsgemäßen Verfahrens. Die Steuervorrichtung kann über eine Kommunikationsverbindung C mit dem technischen System oder einem Netzwerk verbunden sein.

Das jeweilige "Modul", zum Beispiel Simulationsmodul oder Prognosemodul, kann hardwaretechnisch und/oder auch softwaretechnisch implementiert sein. Bei einer hardwaretechnischen Implementierung kann das jeweilige Modul als Teil der Steuervorrichtung, zum Beispiel als Computer oder als Mikroprozessor ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Die Steuervorrichtung 100 ist derart eingerichtet, die Schritte des Verfahrens, wie beispielhaft in den Figuren 1 bis 4 dargestellt, durchzuführen. Mittels des Bereitstellungsmoduls 101 werden ein Simulationsmodell und ein Prognosemodell des technischen Systems 100 bereitgestellt und dem Simulationsmodul 102 und dem Prognosemodul 103 beispielsweise übergeben.

Das Simulationsmodul 102 führt die Auswertung des Simulationsmodells, d.h. die Simulation, durch und ermittelt daraus den Initialzustand 1 für das Prognosemodell. Das Simulationsmodell wird vom Simulationsmodul 102 während der Simulation mittels Messdaten des technischen Systems an dieses angepasst. Das Simulationsmodul 102 kann beispielsweise bis zu einem aktuellen Zeitpunkt t2 die Auswertung des Simulationsmodells durchführen, wobei das Simulationsmodell mittels der Messdaten konfiguriert wird. Anschließend an den aktuellen Zeitpunkt wird über einen Übergangszeitraum Δt2 die Auswertung des Simulationsmodells mittels Fortsetzungsbedingungen vom Simulationsmodul 102 fortgeführt und daraus der Initialzustand 1 zum Zeitpunkt ti ermittelt.

Mittels des Prognosemoduls 103 wird für einen zukünftigen Zeitpunkt eine Vorhersage für das technischen Systems durchgeführt und ein zukünftiger Verlauf 2 ermittelt. Das Ausgabemodul 104 gibt den ermittelten zukünftigen Verlauf 2, der abhängig von den vorgegebenen Fortsetzungsbedingungen für das Prognosemodell ist, zum Steuern des technischen Systems aus. Beispielsweise kann das Ausgabemodul 104 anhand der Fortsetzungsbedingungen und des ermittelten zukünftigen Verlaufs 2 eine Steuerempfehlung oder einen Steuerbefehl für das System ableiten.

Das Simulationsmodul kann beispielsweise während des Prognosezeitraums Δt3 die Simulation fortführen und einen Verlauf bis zu einem zukünftigen Zeitpunkt t3 ermitteln, welcher mit dem zukünftigen Verlauf des technischen Systems verglichen werden kann.

Das Modifikationsmodul 105 kann durch Verändern von Fortsetzungsbedingungen für das Prognosemodell und einer erneuten Auswertung des Prognosemodells anhand der veränderten Fortsetzungsbedingungen einen alternativen zukünftigen Verlauf des technischen Systems ermitteln. Daraus kann vom Ausgabemodul 104 beispielsweise ein alternativer Steuermodus abgeleitet und zur Steuerung des technischen Systems bereitgestellt werden. Mittels eines Optimierungsverfahrens kann beispielsweise automatisch ein optimaler Verlauf ermittelt werden.

Das Datenmodul 106 stellt zusätzliche, beispielsweise vorverarbeitete, Daten über das technischen Systems dem Prognosemodul bereit, so dass eine Auswertung des Prognosemodells mittels dieser zusätzlichen Daten eine Vorhersage über einen zukünftigen Verlaufs des Systems durchgeführt werden kann.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zum rechnergestützten Steuern eines technischen Systems mit den Verfahrensschritten:
- Bereitstellen (S1) eines Simulationsmodells zum Simulieren des technischen Systems und eines Prognosemodells zum Vorhersagen eines zukünftigen Verlaufs des technischen Systems,
- Ermitteln (S2) eines Initialzustands (1) für das Prognosemodell mittels einer Auswertung des Simulationsmodells über einen Simulationszeitraum (Δt1), wobei das Simulationsmodell mittels Messdaten aus dem Simulationszeitraum (Δt1) an das technische System angepasst wird,
- Ermitteln (S3) eines zukünftigen Verlaufs (2) des technischen Systems mittels einer Auswertung des Prognosemodells über einen Prognosezeitraum (Δt3), ausgehend vom Initialzustand (1) und anhand von Fortsetzungsbedingungen für das Prognosemodell,
und
- Ausgeben (S4) des zukünftigen Verlaufs (2) des technischen Systems und der Fortsetzungsbedingungen zum Steuern des technischen Systems.

2. Verfahren nach Anspruch 1, wobei das Simulationsmodell
- bis zu einem aktuellen Zeitpunkt (t2) mittels Messdaten an das technische System angepasst und ausgewertet wird (S2a) und
- nach dem aktuellen Zeitpunkt (t2) über einen Übergangszeitraum (Δt2) bis zum Ende des Simulationszeitraums (Δt1) mittels Fortsetzungsbedingungen für das Simulationsmodell ausgewertet wird (S2b).

3. Verfahren nach einem der vorhergehenden Ansprüche, wobei mindestens eine Fortsetzungsbedingung des Prognosemodells verändert wird und mittels der Auswertung des Prognosemodells mit veränderten Fortsetzungsbedingungen mindestens ein weiterer zukünftiger Verlauf (2) des technischen Systems ermittelt wird.

4. Verfahren nach einem der vorhergehenden Ansprüche, wobei die Auswertung des Simulationsmodells während des Prognosezeitraums (Δt3) fortgesetzt und ein Verlauf des Simulationsmodells ermittelt wird.

5. Verfahren nach einem der vorhergehenden Ansprüche, wobei eine erneute Auswertung des Simulationsmodells abhängig von einem durch eine vorangegangene Auswertung des Simulationsmodells ermittelten Initialzustand (1) durchgeführt wird.

6. Verfahren nach einem der vorhergehenden Ansprüche, wobei der Simulationszeitraum (Δt1) und der Prognosezeitraum (Δt3) jeweils um eine Zeitspanne verschoben und ein zukünftiger Verlauf des technischen Systems ermittelt wird.

7. Verfahren nach einem der vorhergehenden Ansprüche, wobei zusätzliche Daten über das technische System für die Auswertung des Prognosemodells genutzt werden.

8. Steuervorrichtung zum rechnergestützten Steuern eines technischen Systems umfassend:
- ein Bereitstellungsmodul (101) zum Bereitstellen eines Simulationsmodells zum Simulieren des technischen Systems und eines Prognosemodells zum Vorhersagen eines zukünftigen Verlaufs des technischen Systems,
- ein Simulationsmodul (102) zum Ermitteln eines Initialzustands (1) für das Prognosemodell mittels einer Auswertung des Simulationsmodells über einen Simulationszeitraum (Δt1), wobei das Simulationsmodell mittels Messdaten aus dem Simulationszeitraum (Δt1) an das technische System angepasst wird,
- ein Prognosemodul (103) zum Ermitteln eines zukünftigen Verlaufs (2) des technischen Systems mittels einer Auswertung des Prognosemodells über einen Prognosezeitraum (Δt3), ausgehend vom Initialzustand (1) und anhand von Fortsetzungsbedingungen für das Prognosemodell,
und
- ein Ausgabemodul (104) zum Ausgeben des zukünftigen Verlaufs (2) des technischen Systems und der Fortsetzungsbedingungen zum Steuern des technischen Systems.

9. Steuervorrichtung (100) nach Anspruch 8, wobei das Simulationsmodul (102) derart eingerichtet ist, das Simulationsmodell,
- bis zu einem aktuellen Zeitpunkt (t2) mittels Messdaten an das technische System anzupassen und auszuwerten
und
- nach einem aktuellen Zeitpunkt (t2) über einen Übergangszeitraum (Δt2) bis zum Ende des Simulationszeitraums (Δt1) mittels Fortsetzungsbedingungen für das Simulationsmodell auszuwerten.

10. Steuervorrichtung nach Anspruch 8 oder 9, wobei das Simulationsmodul (102) derart eingerichtet ist, die Auswertung des Simulationsmodells während des Prognosezeitraums (Δt3) fortzuführen und einen Verlauf des Simulationsmodells zu ermitteln.

11. Steuervorrichtung nach einem der Ansprüche 8 bis 10, umfassend ein Modifikationsmodul (105), zum Ermitteln mindestens eines weiteren zukünftigen Verlaufs des technischen Systems durch Verändern mindestens Fortsetzungsbedingung des Prognosemodells und mittels der Auswertung des Prognosemodells mit veränderten Fortsetzungsbedingungen.

12. Steuervorrichtung nach einem der Ansprüche 8 bis 11, umfassend ein Datenmodul (106) zum Bereitstellen von zusätzlichen Daten über das technische System für die Auswertung des Prognosemodells.

13. Datenstruktur, in der ein Initialzustand (1) für das Prognosemodell, der durch das Verfahren nach einem der Ansprüche 1 bis 7 ermittelt wird, gespeichert wird und die die Auswertung des Simulationsmodells und des Prognosemodells miteinander koppelt.

14. Computerprogrammprodukt, das direkt in einen programmierbaren Computer ladbar ist, umfassend Programmcodeteile, die dazu geeignet sind, die Schritte des Verfahrens nach einem der Ansprüche 1 bis 7 durchzuführen.

15. Computerlesbares Speichermedium mit einem Computerprogrammprodukt nach Anspruch 14.
